Europäisches Patentamt

European Patent Office

Office européen des brevets

(19)

(11) **EP 1 221 667 A1**

(12) **EUROPEAN PATENT APPLICATION**

(43) Date of publication:
**10.07.2002 Bulletin 2002/28**

(51) Int Cl.⁷: **G06F 17/60**

(21) Application number: **01300150.8**

(22) Date of filing: **09.01.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **BRITISH TELECOMMUNICATIONS public limited company**
**London EC1A 7AJ (GB)**

(72) Inventor: **The designation of the inventor has not yet been filed**

(74) Representative: **Read, Matthew Charles et al**
**Venner Shipley & Co.**
**20 Little Britain**
**London EC1A 7DH (GB)**

(54) **Software tool for heuristic search methods**

(57) A problem modelling tool (PM1) permits a model of a problem to be built that involves a large number of variables such as a workforce scheduling problem and a heuristic search algorithm is used out to optimise a solution for the modelled problem. The modelling tool includes software objects in which an invariant functional relationship including at least one of the variables is defined for providing an invariant functional relationship value in dependence on the value of the or each of the variables, so that the model utilises the invariant functional relationship value in modelling the problem. The heuristic search algorithm can be built by selecting and combining individual searching methods.

EP 1 221 667 A1

**Description**

This invention relates to a software tool for heuristic search methods and has particular but not exclusive application to solving complex numerical problems based on real-world applications.

Hitherto, heuristic search methods have been used to optimise solutions to complex, real-world problems involving large numbers of variables. For example, proposals have been made to use heuristic search methods to optimise schedules used in work force management. In this respect field service engineers may need to perform repair tasks at different locations at different time of the day, according to a schedule. The schedule needs to be optimised as a function of the travel required by the engineers to complete their allocated tasks, the number of tasks left unallocated given the available number of engineers, and delays in task execution, the engineer skills and how well they match to task requirements and other factors such as the urgency of the individual tasks. Hitherto, scheduling systems have been proposed in WO 95/26535 and WO 98/22897. Heuristic search methods have also been proposed for optimising the scheduling of telephone calls, e.g. incoming calls to operations in a call centre, and also for the allocation of frequency bands for use by radio transmitters e.g. in a cellular mobile telecommunications network.

With each of these applications, and others, there are a large number of variables together with a number of constraints which are applied to the system. For example, considering the work force management problem the availability of engineers varies over time and constraints such as the complexity of the tasks involved, their duration, the time taken to travel etc. all need to be taken into account when devising schedules for each individual engineer.

Conventionally, a model of the problem is set up using a digital processor. The model is subject to the aforementioned constraints. Different solutions to the problem can be obtained by changing decision variables of the model and reviewing the resulting solution. For example, in the engineer scheduling problem, the order in which are scheduled to complete their tasks can be changed and other variables such as the duration of the day during which they work can be altered. There may be many other such decision variables. The resulting schedules can be tested against certain objective values such as, for example the time that individual engineers are idle or travel and a schedule may be chosen on the basis of the solution which best satisfies the objective values for the solution.

Thus, the problem model can be used to calculate a number of candidate solutions which are then compared on the basis of their objective values to determine the best solution.

It would be possible to compute each possible solution for the range of values of all of the variables and then search amongst the resulting solutions for a solution which best meets the objective values. This is known as an exact searching method. Sophisticated exact searching methods normally use a tree representation for enumerating all candidate solutions. Constraints are used to prune parts of the tree, which lead to infeasible solutions thus reducing the searching effort.

Alternatively a heuristic search can be carried out. In a heuristic search method, rather than compute/enumerate each possible candidate solution, an individual candidate solution is taken, and then one or more of the values of the decision variables used in the computation of the candidate solution is changed. A new solution is computed on the basis of the changed variables and a determination is made of whether the newly computed solution is better than the first. The process may be repeated a number of times until the resulting solution results in optimisation of the objective values.

Difficulties have been encountered in devising suitable problem models for use with heuristic searching and usually, an individual problem model needs to be specially crafted/set up for a particular problem. The problem model may involve linear processing techniques such that each time a new solution is computed, the problem model needs to carry out a complete set of computations based on the new set of input variables and thus when complex problems are being solved, with many input variables, a significant data processing overhead is involved. In more sophisticated systems, specialised mechanisms may be devised which, after a change to some of the input variables, restrict the computations to only the affected parts of the problem model. These mechanisms need to be coded for each particular problem requiring expert knowledge from the programmer. Furthermore, they are tedious to implement and maintain for realistic problems, which are of complex nature.

A number of different heuristic searching techniques are known in the art for optimising the solution for the problem model. For example, in a so-called single solution or local search technique, a first solution is taken and then perturbed to determine whether a better solution can be obtained when processed by the problem model. In a so-called population search technique, a number of solutions are obtained and a so-called genetic algorithm may be used to combine parts of the solutions into new solutions to be tested with the problem model. It has been found that different heuristic searching techniques have different levels of efficiencies for different problem models. However, when a particular problem model has been designed and a particular heuristic search technique associated with it, it is extremely difficult to change the configuration without extensive reprogramming.

The present invention seeks to overcome these difficulties.

According to the invention in a first aspect there is provided a problem modelling tool for building a model of a problem that involves a plurality of variables whereby a heuristic search method can be carried out to optimise a solution for the modelled problem, comprising a computer program that includes at least one object in which an invariant functional relationship including at least one of the variables is defined for providing an invariant functional relationship value in dependence on the value of the or each of the variables, whereby the model utilises the invariant functional relationship value in modelling the problem.

By the use of Invariants in accordance with the invention a problem model can be built in which constraints and objective values can be declaratively presented in the programs, resulting in a significant simplification of the model. Furthermore, the program may include an object package that includes a class of objects defining a library of different user selectable Invariant operators for use in defining the or each Invariant functional relationship in a problem model. The operators may include Boolean, arithmetic, logical, string, object and set operators.

Each Invariant operator used in the problem model may be so arranged that the Invariant functional relationship value based on a first set of data for a first candidate solution, may be modified in response to a second set of data corresponding to a second candidate solution to derive an Invariant functional relationship value based on the second set of data. In this way, the processing overhead associated with producing more than one candidate solution for use in a heuristic search method, is significantly reduced.

The modelling tool according to the invention may include heuristic searching software configured to perform a heuristic search through candidate solutions for the problem model, for obtaining an optimised solution to the problem.

The invention also includes a method of modelling making use of the aforesaid modelling tool.

In another aspect, the invention includes a problem modelling tool for building a model of a problem that involves a plurality of variables whereby a heuristic search method can be carried out to optimise a solution for the modelled problem, comprising a computer program that includes a heuristic searching algorithm to perform a heuristic search through candidate solutions for the problem model, for an optimised solution to the modelled problem wherein the computer program includes a plurality of different heuristic searching methods configured so that the heuristic searching algorithm can be constructed from a selected plurality of the heuristic searching methods.

The heuristic searching methods may be defined by object classes in a common package.

In order that the invention may be more fully understood an embodiment thereof will now be described by way of example with reference to the accompanying drawings in which:

Figure 1 is a schematic diagram of a processor configuration for running a problem modelling tool according to the invention;
Figure 2 is a schematic diagram of object packages for the problem modelling tool;
Figure 3 is a schematic diagram of actors for use in modelling a workforce scheduling problem;
Figure 4 is a schematic flow diagram of process steps performed in carrying out the modelling;
Figure 5 is a schematic diagram of the problem modelling tool and its solution; and
Figure 6 is a schematic illustration of a tree of heuristic searching methods.

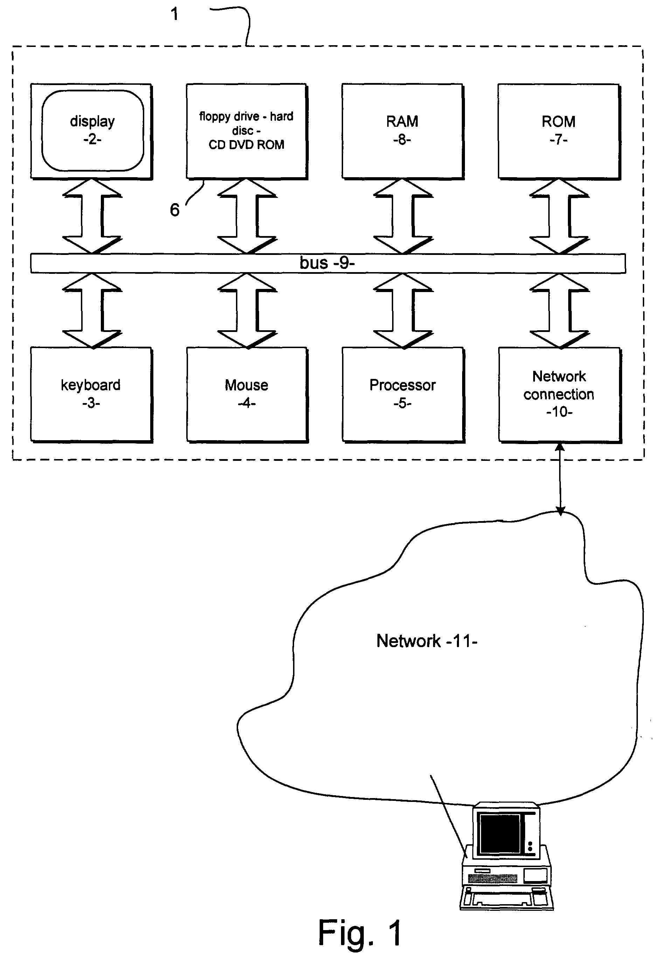

In the following description, an example of a modular software modelling tool is described. The software which forms the tool can be run on any suitable data processing apparatus such as the configuration shown in Figure 1, which comprises a conventional workstation or personal computer 1 shown in dotted outline, which, as well known in the art includes a visual display 2, keyboard 3, mouse 4, processor 5, storage in the form of a floppy disc, hard disc or CD/DVD 6, read-only memory 7 random access memory 8, all connected by a common bus 9. The configuration may also include a network connection 10 which may provide a connection to processors at remote locations through a network 11.

Programs which make up the software modelling tool may be stored on the storage device 6 and run by the processor 5 under the control of the keyboard 3 and mouse 4, so as to provide an output on the display 2. The programs may also be run according to different regimes, for example in a distributed manner through the network 11 or in other configurations evident to those skilled in the art. In the following example, it is assumed that the programs which make up the modelling tool are stored in the storage device 6.

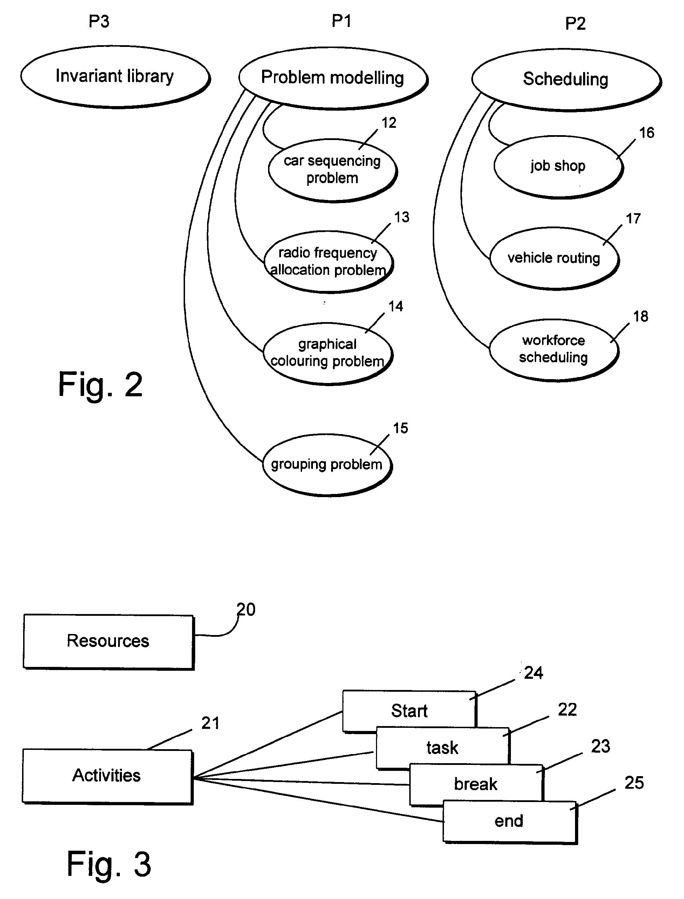

The software tool according to the invention adopts an object oriented approach is programmed in an object oriented language. In the following example, Java is used although C++ or other object-oriented languages could be utilised. The tool is configured in object packages as shown in Figure 2. The software includes a package P1 that includes an object class relating to problem modelling, to enable a particular problem to be modelled. Examples include:

a car sequencing problem 12, which models the constraints for sequencing cars on the same production line, each one with different mechanical and electrical components options to be fitted;
radio frequency allocation problem 13, which models the allocation of frequencies to transmitters for use in a mobile telephone network;
graph colouring problem 14, to model the application of assigning different colours to regions of a graphical display; and

a grouping problem 15, which models the partition of a set of persons to groups subject to various constraints and preferences of these persons..

A second package P2 includes an object class for scheduling. Objects of the scheduling package P2 may extend objects of the problem modelling package P1.

The object classes of the scheduling package P2 may be suitable for modelling:

shop job scheduling 16 for scheduling the processing of job orders in a shop floor over a number of machines subject to sequencing and other constraints;
routing schedules 17 for vehicles for e.g.package delivery vehicles, and
workforce scheduling 18 for creating individual work schedules for a number of technicians to carry out tasks such as repair tasks.

The software modelling tool also includes a package P3 of Invariants. This comprises a library of Invariant object classes which are used for model building as will be explained in more detail hereinafter.

The modelling of a workforce scheduling problem will now be considered in more detail by way of example. Generally, the actors in the problem are shown in Figure 3. A number of resources 20, typically comprising field engineers are required to carry out a number of activities 21, e.g. repair tasks 22, engineer breaks 23, start of day activities (e.g. leaving the company depot) 24 and end of day activities (e.g. returning to the company depot) 25.

The objective is to schedule the activities 21 so that they can be carried out by the resources 20 with minimal wasted time for the engineers. A typical example is the schedule required for individual field service engineers to carry out individual repair tasks to a telephone network. The repair tasks are reported automatically by computer and are given individual priorities. The problem modelling tool is used to set up a problem model for solving this combinatorial optimisation problem.

In order to model the scheduling problem, a number of object classes are utilised from the packages P1 - P3 shown in Figure 2.

Instances of the following classes may be used.

### Class WSP (Workforce Scheduling Problem)

This class is held in the scheduling package P2 and extends an object class "Schedule" which in its turn extends the object class Problem found in package P1. In the nomenclature of Java, the class can be expressed as:

```
com.bt.examples.wsp
Class WSP

java.lang.Object
  |
  +--com.bt.mdl.Problem
         |
         +--com.bt.sch.Schedule
```

### Class JOB

This extends an object class Task, which in its turn extends a class Activity found in the package P2. In the nomenclature of Java, the class can be expressed as:

```
com.bt.examples.wsp
Class Job

java.lang.Object
  |
  +--com.bt.sch.Activity
         |
```

```
+--com.bt.sch.Task
```

**Class TECH**

This corresponds to an individual technician and inherits from an object class Resource found in the scheduling package P2. In the nomenclature of Java, the class can be expressed as:

**com.bt.examples.wsp**

**Class Tech**

```
java.lang.Object
     |
+--com.bt.sch.Resource
```

In accordance with the invention, objects from the Invariant library package P3 are used to provide declarative programming capabilities within the programming language used to define the problem i.e. the scheduling model. As an example, the object of Activity will be considered in more detail, the object Activity has associated decision variables "previous" and "next". Also, Activity has associated attributes "start time" (st) and "end time" (et). These attributes define the start and end times for a particular Activity (e.g. a job to be carried out by an engineer) for use in solving the scheduling problem.

In accordance with the invention, by using the Invariants defined in the Invariant library package P3, a declarative relationship between the start and end time for successive jobs in the schedule can be defined as follows:

$$st = previous.et+delay \qquad\qquad (1)$$

Thus, the start time for a particular Activity can be defined in terms of the end time of the previous activity time (i.e. for a previous task) plus a delay which may correspond to a travel time or a set up time. The delay time may be a constant i.e. a fixed time period.

Similarly, the end time for the Activity may be defined as follows:

$$et = st+duration \qquad\qquad (2)$$

Also, the Activity may be subject to a constraint e.g. must be completed before a particular time e.g. 8 p.m.. This can be expressed as follows:

$$et < 8\ p.m. \qquad\qquad (3)$$

These relationships can be expressed in the Java programming language using the Invariant relationships from the Invariants package P3.

Details of some of the classes from the Invariant library are set out below for the package P3, which is named hereinafter as "inv"

**Package com.bt.inv**

Provides all the necessary classes for implementing arithmetic and symbolic invariants in Java.

| Interface Summary | |
|---|---|
| *InvariantMode IListener* | This is the interface that needs to be implemented by classes which they want to listen to changes in the invariant model. |

(continued)

| Interface Summary | |
|---|---|
| *Transaction* | This is the interface implemented by the manager class of the Invariant network. |
| *Variable* | This interface provides methods for saving/restoring the values of variables. |

| Class Summary | |
|---|---|
| **BooleanExp** | This is the base class for all boolean expression classes. |
| **BooleanVar** | This class is used for representing boolean variables. |
| **BooleanVarMemento** | Memento of the value of a boolean variable. |
| **ExternalData** | This class provides the user with the ability to define external functions and predicates to be used in the computation of invariants. |
| **IntegerExp** | This is the base class for all integer expression classes. |
| **IntegerSetExp** | This class implements an integer set expression. |
| **IntegerSetIterator** | An iterator class for integer set expressions which allows the programmer to iterate over the elements that are contained in an integer set expression. |
| **IntegerSetVar** | This class is used for representing integer set variables. |
| **IntegerVar** | This class is used for representing integer variables. |
| **IntegerVarMemento** | Memento of the value of an integer variable. |
| **Inv** | The class Inv provides access to all the operators for building invariants. |
| **Invariant** | This is the base class for all expression classes. |
| **InvariantManager** | This is the manager class for the invariant network. |
| **InvariantModelEvent** | This class represents an event in the model of invariants kept in the invariant manager. |
| **InvariantObservable** | This class allows the user to get notified of changes to the current/saved value of an invariant. |
| **Memento** | Memento base class. |
| **ModelChangeSessionStats** | This offers access to statistics related to the model change sessions of an InvariantManager object. |
| **ObjectExp** | This is the base class for all object expression classes. |
| **ObjectSetExp** | This class implements an object set expression. |
| **ObjectSetIterator** | An iterator class for object set expressions which allows the programmer to iterate over the elements that are contained in an object set expression. |
| **ObjectSetVar** | This class is used for representing object set variables. |
| **ObjectVar** | This class is used for representing object variables. |
| **ObjectVarMemento** | Memento of the value of an object variable. |
| **RealExp** | This is the base class for all real expression classes. |
| **RealSetExp** | This class implements an real set expression. |
| **RealSetIterator** | An iterator class for real set expressions which allows the programmer to iterate over the elements that are contained in an real set expression. |
| **RealSetVar** | This class is used for representing real set variables. |
| **RealVar** | This class is used for representing real variables. |

(continued)

| Class Summary | |
|---|---|
| **RealVarMemento** | Memento of the value of a real variable. |
| **State** | This class holds a snapshot of all or some of the variables of an invariant manager using the memento classes. |
| **StringExp** | This is the base class for all string expression classes. |
| **StringSetExp** | This class implements an string set expression. |
| **StringSetIterator** | An iterator class for string set expressions which allows the programmer to iterate over the elements that are contained in an string set expression. |
| **StringSetVar** | This class is used for representing string set variables. |

Considering the class Inv in the Table above, this gives access to classes for the main operators used in declaring Invariants in the problem model

**com.bt.inv**

# Class Inv

```
java.lang.Object
  |
  +--com.bt.inv.Inv
```

public class **Inv**

extends java.lang.Object

The class Inv provides access to all the operators for building invariants. These invariants can be representing input variables or expressions (i.e. derived from input variables or other expressions) of one of the basic data types Integer, Real, Boolean, Object, String. No objects of the class need to be created since all its methods are static.

| Method Summary | |
|---|---|
| Static BooleanExp | **not**(BooleanExp b) |
| Static BooleanExp | **and**(BooleanExp b1, BooleanExp b2) |
| Static IntegerExp | **abs**(IntegerExp i) |
| Static IntegerExp | **plus**(IntegerExp il, IntegerExp i2) |
| Static RealExp | **Prod**(RealSetExp s, RealExp[] v) |
| static RealExp | **sum**(RealExp[] v) |
| Static BooleanExp | **lt**(IntegerExp il, IntegerExp i2) |
| Static IntegerExp | **elem**(IntegerExp i, IntegerExp[] v) |

This is just a selection of a few methods. In practice, several hundred are provided to cover the mathematical operations to be performed when using Invariants
Thus, the equations (1) - (3) above can be expressed as follows:

*Equation (1)*

IntegerExp st = Inv.plus(Inv.elem(previous, et_vector),delay);

*Equation (2)*

IntegerExp et = Inv.plus(st, duration);

*Equation (3)*`

BooleanExp end_time_constraint = Inv.lt(et, 8);

The operator "elem" used above returns the i-th element of a vector where i is an expression or a variable. In the example above, it is used to always return the end time belonging to the "previous" activity from the vector structure holding the values of all activity end times "et_vector". Also the "1t" operator stands for "less than" translating the equation (3) literally into code. The advantage of this representation is that all expressions are automatically and efficiently updated when an input variable such as "previous" changes value thus implementing a declarative programming paradigm inside an object-oriented language such as Java The Invariant library provides a large number of different declarative functions(operators) which can be used in defining the problem model. The advantage of using the invariants is that when multiple solutions are derived from the model, the computing time required to compute the successive solutions, after modifications, is significantly reduced due to efficient algorithms to be explained below. Previously, in Java it would be necessary to define procedurally all of the steps corresponding to the invariants which, would involve significantly more processing time when computing/changing individual solutions to the modelling framework. In complex problem models, the programmer should also have taken care to write code which updates all variables which depend on other variables when these other variables change, something not required with invariants which fully automate this task.

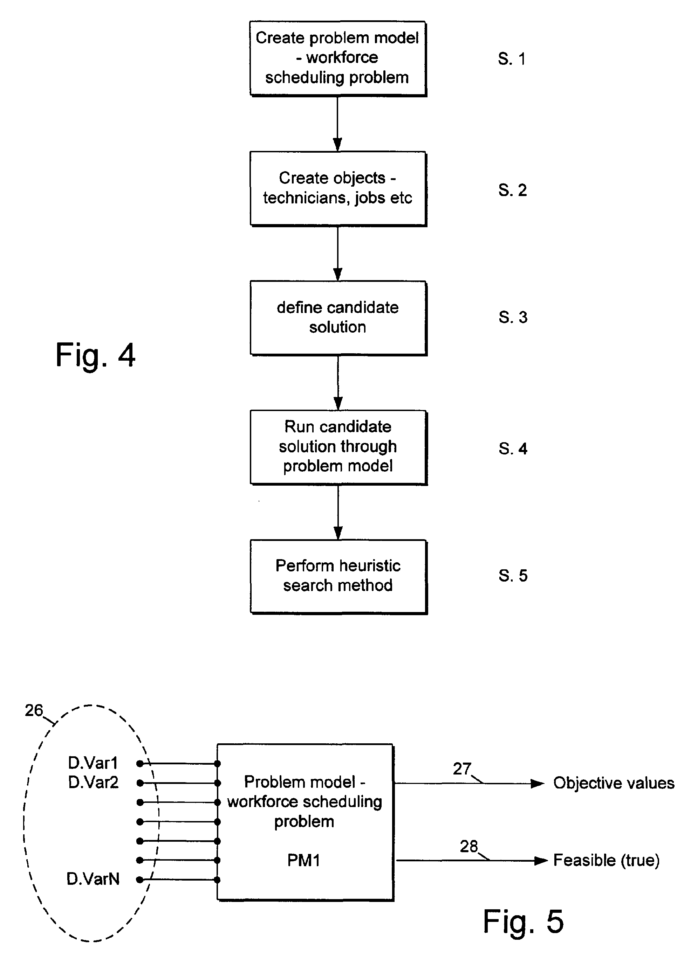

Figure 4 illustrates schematically the steps involved in setting up and running a problem model, which in this case, comprises a work scheduling problem model.

At step S1, object classes are selected from the scheduling package P2 and optionally from the problem modelling package P1 depending on the tasks involved.

At step S2, objects are created as appropriate for the model concerned e.g. TECH, JOBS, WSP.

Then, at step S3 the numerous variables for the model are defined in a Solution class object for the model.

At step S4, the program is run to test the Solution object against a number of objective values for the model and also to check whether the Solution is feasible (i.e. satisfies any restrictions imposed). The running of the program at step S4 involves a constraint satisfaction algorithm. It will be understood that the previously described Invariants constitute in effect one-way data flow constraints. Two common constraint satisfaction schemes for one-way constraints are the mark/sweep strategy as described in Hudson, S., Incremental Attribute Evaluation: A Flexible Algorithm for Lazy Update, *ACM Transactions on Programming Languages and Systems*, Vol.13, No. 3, pp. 315-341, July 1991 and the topological ordering strategy described in Hoover, R., *Incremental Graph Evaluation*. PhD thesis, Department of Computer Science, Cornell University, Ithaca, NY, 1987. A mark/sweep algorithm has two phases. In the mark phase, constraints that depend upon changed variable are marked out-of-date. In the sweep phase constraints whose values are requested are evaluated and the constraints are marked as up-to-date. If the constraints are only evaluated when their values are requested, the sweep phase is known as a "lazy" evaluator. If all of out-of-date constraints are evaluated as soon as the mark phase is complete, the sweep phase is called an "eager" evaluator.

It has been found that mark/sweep algorithms have the advantage of being more flexible in supporting both "eager" and "lazy" evaluation modes and because of their simplicity they can be implemented efficiently.

Figure 5 is a schematic illustration of a problem model PM1 created using the software modelling tool. It will be understood that in this example, the problem model PM1 represents a workforce scheduling problem. A Solution object 26 defined at step S4, which contains a specific set of values of decision variables for the model i.e. number of engineers, number of tasks, task sequence for each engineer, type of tasks, task location, is run through the problem model PM1 to produce one or more objective values 27 which constitute a measure of the suitability of the candidate Solution 26. The problem model may also provide an output 28 indicative of whether the candidate solution is feasible i.e. satisfies the various problem constraints.

The heuristic search is then carried out with a view to improving upon the candidate Solution 26. As known in the art, there is a number of different heuristic search methods and an overview will now be given.

***Single Solution search techniques***

This involves taking a single solution for the problem model and changing it. The changed solution is then evaluated through the problem model to see whether it better meets the objective values.

It will be understood that the solution comprises individual values of the decision variables DVar1... DVarN of the solution 26 shown in Figure 5. The attempt to improve the solution involves changing individual ones of the decision variables. This is known as a move.

*Population search techniques*

In this approach, a population of individual solutions is generated and at each complete iteration a new population is built from the previous one. The ways to do it is to change values of the decision variables of a solution or to combine parts of several individual solutions to produce a new candidate ones, for example using a so-called genetic algorithm. Each new candidate solution is then tested using the problem model to see whether it is an improvement on the previous candidate solution.

Considering a single solution search, a number of different techniques are known in the art including initial solution generation, local search, neighbourhood, neighbourhood search, aspiration criterion, dynamic objective function and others.

In a population based heuristic search, known techniques include initial population generation, mutation population method, crossover population method, selection population method, crossover, mutation, selection restart population method and others.

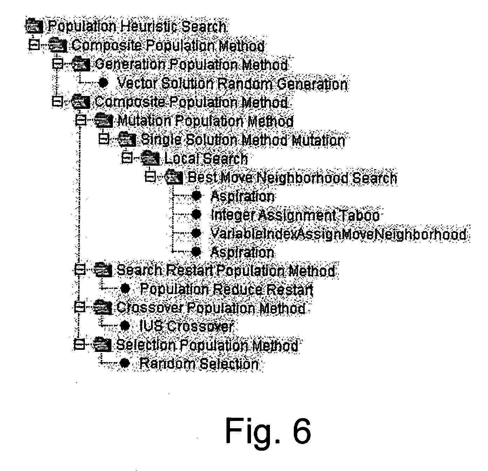

In accordance with the invention, an object class package is defined in which the different search techniques are defined as objects so that they can be readily selected and run to optimise the solution for the problem model. Thus, as shown in Figure 6, a number of heuristic search methods can be defined in a tree and multiple types of searching can be combined. Thus, even a non-expert can easily build a heuristic search algorithm by selecting individual heuristic search methods and combining them to provide a heuristic search algorithm.

Figure 6 illustrates a tree that defines a hybrid algorithm (Population-based algorithm) using a local search as a mutation.

Thus, in accordance with the invention, instead of individually hard coding a heuristic search method for a particular problem model, the search algorithm can be assembled from components providing different methods and readily changed, if an experience shows that a different form of heuristic searching for the problem model concerned is preferable.

Thus, in accordance with the invention, the understanding, tuning and comparison of heuristic search methods can readily be carried out.

More details of the hierarchy of the search component classes readily available are set out below.

**Class Hierarchy**

**class com.bt.hs.SearchComponent**

☐ **class com.bt.hs.aspiration.Aspiration**
☐ **class com.bt.hs.crossover.Crossover**

    ☐ class com.bt.hs.crossover.**Bipoint**
    ☐ class com.bt.hs.crossover.**IUS**
    ☐ class com.bt.hs.crossover.**Monopoint**
    ☐ class com.bt.hs.crossover.**Uniform**

☐ **class** com.bt.hs.objectivevalue.**DynamicObjectiveValue**

    ☐ class com.bt.hs.objectivevalue.**ProblemGLS**

☐ **class com.bt.hs.mutation.Mutation**

    ☐ class com.bt.hs.mutation.**SingleNeighborhoodSearchMutation**
    ☐ class com.bt.hs.mutation.**SingleSolutionMethodMutation**

☐ **class com.bt.hs.neighborhood.Neighborhood**

    ☐ class com.bt.hs.neighborhood.**PositionAssignMoveNeighborhood**

&#9633;   class com.bt.hs.neighborhood.**PositionMoveAtMoveNeighborhood**
&#9633;   class com.bt.hs.neighborhood.**PositionSwapMoveNeighborhood**
&#9633;   class com.bt.hs.neighborhood.**VariableIndexAssignMoveNeighborhood**
&#9633;   class com.bt.hs.neighborhood.**VariableIndexMoveAtMoveNeighborhood**
&#9633;   class com.bt.hs.neighborhood.**VariableIndexSwapMoveNeighborhood**

&#9633;   **class com.bt.hs.neighborhoodsearch.NeighborhoodSearch**

  &#9633;   class com.bt.hs.neighborhoodsearch.**CompositeNeighborhoodSearch**

    &#9633;   class com.bt.hs.neighborhoodsearch.**PerformAllCNS**
    &#9633;   class com.bt.hs.neighborhoodsearch.**PerformBestOfAllCNs**

  &#9633;   class com.bt.hs.neighborhoodsearch.**SingleNeighborhoodSearch**

    &#9633;   class com.bt.hs.neighborhoodsearch.**AspirationPlus**

      &#9633;   class com.bt.hs.neighborhoodsearch.**CircularAspirationPlus**
      &#9633;   class com.bt.hs.neighborhoodsearch.**RestartAspirationPlus**

    &#9633;   class com.bt.hs.neighborhoodsearch.**BestImprovement**
    &#9633;   class com.bt.hs.neighborhoodsearch.**BestMoveNeighborhoodSearch**
    &#9633;   class com.bt.hs.neighborhoodsearch.**CircularFirstImprovement**
    &#9633;   class com.bt.hs.neighborhoodsearch.**FirstImprovement**
    &#9633;   class com.bt.hs... .borhoodsearch.**FirstLegalMoveNeighborhoodSearch**
    &#9633;   class com.bt.hs....borhoodsearch.**RestartFirstImprovement**
    &#9633;   class com.bt.hs.neighborhoodsearch.**ThresholdNeighborhoodSearch**

      &#9633;   class com.bt.hs....borhoodsearch.**InvariantSimulatedAnnealing**

        &#9633;   class com.bt.examples.cs.**CarSequencingISA**

&#9633;   **class com.bt.hs.PopulationMethod**
&#9633;   **class com.bt.hs.CompositePopulationMethod**

  &#9633;   class com.bt.hs.**CrossoverPopulationMethod**
  &#9633;   class com.bt.hs.**GenerationPopulationMethod**
  &#9633;   class com.bt.hs.**MutationPopulationMethod**
  &#9633;   class com.bt.hs.**SearchRestartPopulationMethod**
  &#9633;   class com.bt.hs.**SelectionPopulationMethod**

&#9633;   **class com.bt.hs.populationrestart.PopulationSearchRestart**

  &#9633;   class com.bt.hs.populationrestart.**PopulationReduceRestart**

&#9633;   **class com.bt.hs.Search**

  &#9633;   class com.bt.hs.**PopulationHeuristicSearch**
  &#9633;   class com.bt.hs.**SingleSolutionHeuristicSearch**

&#9633;   **class com.bt.hs.restart.SearchRestart**

  &#9633;   class com.bt.hs.restart.**ReduceRestart**

    &#9633;   class com.bt.examples.fa.**SelectableValuesReduceRestart**

&#9633;   **class com.bt.hs.selection.Selection**

☐ class com.bt.hs.selection.**RandomSelection**
☐ class com.bt.hs.selection.**SUSSelection**

☐ **class com.bt.hs.SingleSolutionMethod**

☐ class com.bt.hs.**CompositeSingleSolutionMethod**
☐ class com.bt.hs.**GenerationSingleSolutionMethod**

☐ class com.bt.hs.**SSG UsingConstruction**
☐ class com.bt.hs.**SSG UsingCurrentProblem**
☐ class com.bt.hs.**SSG UsingRandom**

☐ **class com.bt.hs.LocalSearch**

☐ class com.bt.hs.**ReduceConflictLocalSearch**

☐ class com.bt.hs.**PerturbationSingleSolutionMethod**
☐ class com.bt.hs.**SearchRestartSingleSolutionMethod**

☐ **class com.bt.hs.taboo.Taboo**

☐ class com.bt.hs.taboo. **IntegerAssignmentTaboo**
☐ class com.bt.hs.taboo.**SequencesPositionTaboo**

Thus in accordance with the invention a highly modular and flexible modelling tool is provided which simplifies the construction of a problem model and efficiently allows heuristic searching to be performed in a problem solver model that comprises the problem modelling tool used in combination with the heuristic searching algorithm to optimise a solution for the modelled combinatorial problem.

**Claims**

1. A problem modelling tool for building a model of a problem that involves a plurality of variables whereby a heuristic search method can be carried out to optimise a solution for the modelled problem, comprising a computer program that includes at least one object in which an invariant functional relationship including at least one of the variables is defined for providing an invariant functional relationship value in dependence on the value of the or each of the variables, whereby the model utilises the invariant functional relationship value in modelling the problem.

2. A problem modelling tool according to claim 1 including heuristic searching software configured to perform a heuristic search through candidate solutions for the problem model, for an optimised solution to the modelled problem.

3. A problem modelling tool according to claim 2 wherein the heuristic searching software includes a plurality of different searching methods that can be configured selectively into a searching algorithm.

4. A problem modelling tool according to any preceding claim including an object package that includes a class of objects defining a library of different user selectible invariant operators for use in defining the or each invariant functional relationship in the problem model.

5. A problem modelling tool according to claim 4 wherein the operators include Boolean, arithmetic, logical, string, object and set operators.

6. A problem modelling tool according to any preceding claim including software corresponding to an algorithm for running data corresponding to candidate solutions to the problem through the model to generate corresponding objective values for use in evaluating the candidate solutions in the heuristic search for optimising a solution to the problem.

7. A problem modelling tool according to claim 6 wherein the or each invariant operator used in the problem model is so arranged that the invariant functional relationship value based on a first set of data for a first candidate solution, is modified in response to a second set of data corresponding to a second candidate solution to derive an invariant functional relationship value based on the second set of data.

8. A method of modelling a problem that involves a plurality of variables whereby a heuristic search method can be carried out to optimise a solution for the modelled problem comprising constructing the model using a computer program that includes at least one object in which an invariant functional relationship including at least one of the variables is defined for providing an invariant functional relationship value in dependence on the value of the or each of the variables, whereby the model utilises the invariant functional relationship value in modelling the problem.

9. A method according to claim 8 including defining the invariant functional relationship by selecting an invariant operator from an object class that defines a library of different user selectable invariant operators for use in defining invariant functional relationships in the problem model.

10. A problem modelling tool for building a model of a problem that involves a plurality of variables whereby an heuristic search method can be carried out to optimise a solution for the modelled problem, comprising a computer program that includes a heuristic searching algorithm to perform a heuristic search through candidate solutions for the problem model, for an optimised solution to the modelled problem **characterised in that** the computer program includes a plurality of different heuristic searching methods configured so that the heuristic searching algorithm can be constructed from a selected plurality of the heuristic searching methods.

11. A problem modelling tool according to claim 10 wherein the heuristic searching methods are defined by object classes in a common package.

12. A method of constructing a problem model using a tool according to claim 10 or 11 including selecting a plurality of said searching methods and constructing the heuristic searching algorithm therefrom.

13. A problem solver including a problem model constructed according to a method as claimed in claim 8, 9 12 or 13.

14. Data processing apparatus configured to run a problem model configured using a tool as claimed in any one of claims 1 to 7 or 10 or 11.

1

| | | | |
|---|---|---|---|
| display -2- | floppy drive - hard disc - CD DVD ROM | RAM -8- | ROM -7- |

6

bus -9-

| | | | |
|---|---|---|---|
| keyboard -3- | Mouse -4- | Processor -5- | Network connection -10- |

Network -11-

## Fig. 1

P3

P1

P2

Invariant library

Problem modelling

Scheduling

car sequencing problem 12

job shop 16

radio frequency allocation problem 13

vehicle routing 17

graphical colouring problem 14

workforce scheduling 18

grouping problem 15

# Fig. 2

Resources 20

Activities 21

Start 24

task 22

break 23

end 25

# Fig. 3

Fig. 4

| | |
|---|---|
| Create problem model - workforce scheduling problem | S. 1 |
| Create objects - technicians, jobs etc | S. 2 |
| define candidate solution | S. 3 |
| Run candidate solution through problem model | S. 4 |
| Perform heuristic search method | S. 5 |

26

D.Var1
D.Var2

D.VarN

Problem model - workforce scheduling problem

PM1

27 → Objective values

28 → Feasible (true)

Fig. 5

Population Heuristic Search
  Composite Population Method
    Generation Population Method
      ● Vector Solution Random Generation
    Composite Population Method
      Mutation Population Method
        Single Solution Method Mutation
          Local Search
            Best Move Neighborhood Search
              ● Aspiration
              ● Integer Assignment Taboo
              ● VariableIndexAssignMoveNeighborhood
              ● Aspiration
    Search Restart Population Method
      ● Population Reduce Restart
    Crossover Population Method
      ● IUS Crossover
    Selection Population Method
      ● Random Selection

# Fig. 6

**European Patent Office**

**DECLARATION**

which under Rule 45 of the European Patent Convention shall be considered, for the purposes of subsequent proceedings, as the European search report

**Application Number**

EP 01 30 0150

---

The Search Division considers that the present application, does not comply with the provisions of the EPC to such an extent that it is not possible to carry out a meaningful search into the state of the art on the basis of all claims

Reason:

| **CLASSIFICATION OF THE APPLICATION (Int.Cl.7)** |
| --- |
| G06F17/60 |

The subject-matter claimed in claims 8, 9 and 12 falls under the provisions of Article 52(2) and (3) EPC, such subject-matter relating to a mathematical method.

Claims 1-7, 10, 11, 13 and 14 relate to a conventional tool, problem solver and apparatus for performing the mathematical method of claims 8,9 and 12. Although these claims do not literally belong to the method category, they essentially claim protection for the same mathematical effect as the method claims. The Search Division considers that searching this subject-matter would serve no useful purpose. It is not at present apparent how the subject-matter of the present claims may be considered defensible in any subsequent examination phase in front of the EPO with regard to the provisions of Articles 54 and 56 EPC (novelty, inventive step; see also Guidelines B-VII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
| --- | --- | --- |
| THE HAGUE | 9 May 2001 | Suendermann, R |

EPO FORM 1504 (P04C37)